# EUROPEAN PATENT SPECIFICATION

(11) **EP 0 549 137 B1**
(45) Date of publication and mention of the grant of the patent: **28.05.1997**
(21) Application number: 92310715.5
(22) Date of filing: 24.11.1992
(51) Int. Cl.: B02C 21/00

(54) **Method for grinding of material**
Materialzerkleinerungsverfahren
Procédé de broyage de matériaux

(30) Priority: 23.12.1991 DK 2054/91
(43) Date of publication of application: 30.06.1993
(73) Proprietor: F.L. Smidth & Co. A/S, DK-2500 Valby, Copenhagen (DK)
(72) Inventor: Folsberg, Jan, DK-2500 Valby, Copenhagen (DK)
(74) Representative: Jackson, Peter Arthur

(56) References cited:
- WO-A-92/09376
- DE-A- 3 128 865
- DE-B- 1 283 655
- FR-A- 2 531 876
- US-A- 1 927 596
- US-A- 3 794 251
- US-A- 4 869 434

## Description

The present invention relates to a method for grinding material, e.g. mineral material for cement manufacturing, by which method the material is ground in a roller mill, dried and conveyed by means of a transport gas, sorted in a classifying separator and precipitated from the transport gas in a precipitation separator. Furthermore, the invention relates to a plant for carrying out the method.

From the US patent No. 4.869.434 and the DK patent application No. 2804/90, plants are known for grinding e.g. raw material for the cement manufacture, and comprising a roller mill, e.g. a vertical mill or a roller press, and a separator sorting the ground material into a coarse fraction which is passed to the roller mill for further grinding, and a fine fraction which is passed to the next stage in the cement manufacturing process.

In these plants hot gas is used for conveying the material through the separator and also for drying the material. The finish-ground material, i.e. the fine fraction leaving the separator, is consequently almost completely dried, like the coarse fraction, which is returned to the roller mill for further grinding, is also relatively dry.

However, it is common knowledge that the moisture of the material to be ground influences the roller mill operation. Thus when grinding dry materials it is impossible, all other things being equal, to operate at the same high roller velocity as for grinding slightly moist materials without involving operational problems, e.g. an increased vibration level, and furthermore the grinding efficiency is lower with dry materials, meaning that the material must pass through the grinding process several times, and that the capacity utilization of the roller mill therefore is lower.

It is attempted to solve this problem deriving from grinding of dry materials by spraying water on the material to be ground so that an optimum moisture level for the grinding is obtained. This solution is, however, relatively energy demanding, because the injected water has to be removed again, which normally takes place by evaporation.

The object of the present invention is therefore to provide for a method for grinding material, while avoiding the aforementioned disadvantages.

US-A-3794251 discloses a method for grinding material, by which method the material is ground in a mill, dried and conveyed by means of a transport gas, and sorted in a classifying separator from which a coarse fraction is returned to the mill, while the fine fraction is precipitated from the transport gas in a precipitation separator, and, according to the present invention, such a method is characterized in that the mill is a roller mill; in that the moisture of the material in the mill and in the classifying separator is controlled by regulating the heat content of the transport gas being directed to the separator, and in that hot gas by-passing the mill and classifying separator is passed to a drying chamber, arranged between the classifying separator and the precipitation separator for final drying of the material.

Thus, it is obtained that the material to be ground in the roller mill always contains a certain amount of moisture, even when the circulation factor for the material is relatively high, and that the roller mill is therefore able to function all of the time under the best operating conditions and consequently to be utilised to the maximum without requiring additional water or heat.

The gas used for drying and transportation of the materials in connection with grinding and separation is normally supplied from a preheater in a kiln plant or from a separate heat generator, and according to the invention it is therefore preferred that also the gas for the final drying in the drying chamber is supplied from a preheater or a heat generator.

To be able to control the drying factor of the material to be ground, by means of a regulation of the heat content of the gas introduced into the classifying separator, it is moreover preferred that the gas, being introduced into the drying chamber for the final drying of the material herein, at least partly is extracted via a first duct as a partial portion of the gas which via a second duct is passed to the classifying separator, that the gas from the precipitation separator is conveyed via a fan and at least partly via a third duct is introduced in and mixed with the gas in the second duct, and in that the gas portions through the ducts are controlled by means of control devices.

The invention also includes a plant for carrying out the new method, the plant comprising a grinding, drying and separation unit, the unit including a roller mill and a classifying separator; a drying chamber; a precipitation separator; a fan; ducts for the supply and discharge of gas to and from the unit; a duct which by-passes the unit and which connects the gas supply duct of the unit with the drying chamber; regulation devices for controlling the gas flows through the ducts; and means for at least partly recirculating gas from the precipitator to the unit.

The invention will now be described with reference to the accompanying drawing, which is diagrammatic, and in which:
Fig. 1 shows a layout sketch of a plant, where the method according to the invention is used;
Fig. 2 shows a plant comprising a vertical mill with built-in classifying separator, in which plant the method according to the invention is used; and
Fig. 3 shows a plant comprising a roller press and a classifying separator, in which plant the method according to the invention is used.

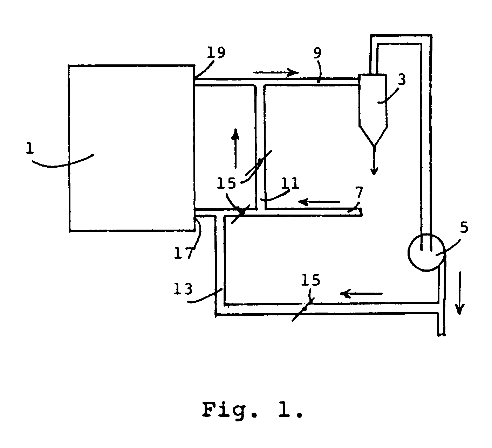

The plant in Fig. 1 comprises a grinding, drying and separation unit 1, and a precipitation cyclone 3. Hot gas is supplied to the plant via a duct 7 from a preheater or heat generator, not shown. The hot gas is introduced via a gas inlet 17 into the unit 1, in which the gas dries the milling product and coneys it to the classifying separator in the unit 1. The fine fraction sorted out is conveyed suspended in the gas via a gas outlet 19 from the unit 1 and through a chamber or a duct 9 to the precipitation cyclone 3. In the cyclone 3 the dried and finish-ground raw material is separated from the gas, which via a fan 5 is passed to the ambient air or via a duct 13 is returned to the duct 7 for reuse as transport gas in the unit 1.

According to the invention, the plant is moreover provided with a by-pass duct 11 and with devices 15 for regulating the gas flows in the ducts 7, 11 and 13.

By means of the regulation devices 15 the heat contained in the gas from the duct 7 can be distributed between the unit 1 and the chamber 9 in such a manner that the material in the unit 1 is only dried to the moisture level resulting in optimum operation of the grinding unit concerned.

Subsequently, the final drying takes place in the chamber 9 by means of the hot gas which is directed from the duct 7 via the duct 11 into the chamber 9.

The gas, which is directed away from the cyclone 3 via the fan 5 can be recirculated via the duct 13 to the duct 7 and/or the unit 1, to ensure that the gas volume introduced into the unit 1 is sufficient for conveying of the material through the unit. Since this gas has already been used for drying of material, it is so water-saturated that it has practically no influence on the drying.

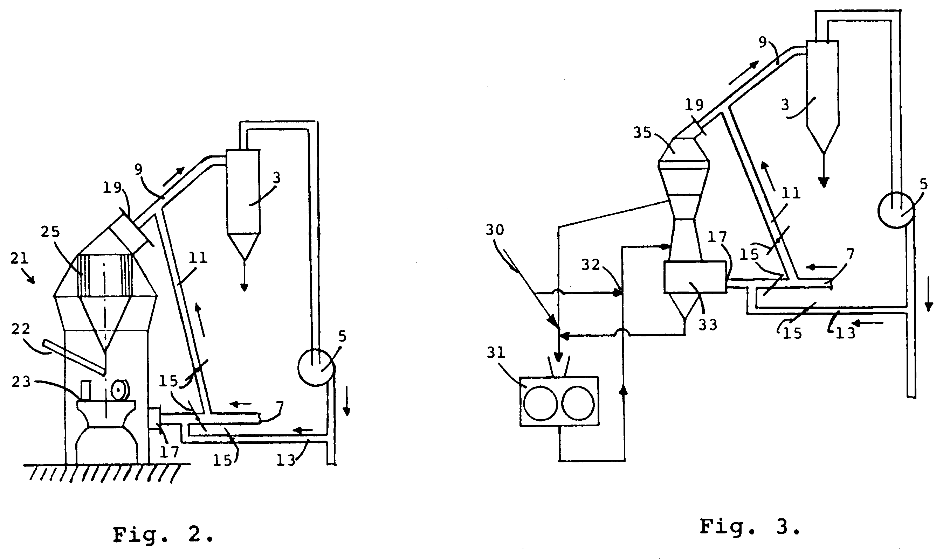

Figs. 2 and 3 show embodiments of two different plants, in which the method according to the invention is used. The plant in Fig. 2 comprises a vertical mill 21 with a grinding unit 23 and a built-in separator 25. New material is introduced into the mill via a channel 22 and is ground in the grinding unit 23. Gas is introduced via the gas inlet 17 and conveys the material from the grinding unit 23 to the separator 25, by which the ground material is sorted into a coarse fraction which is returned to the grinding unit, and a fine fraction, which suspended in the transport gas is conveyed via the gas outlet 19 to the drying chamber 9, in which the final drying of the material is carried out by means of hot gas supplied via the duct 11 from the duct 7. The control of the material moisture in this plant is carried out in the same manner by means of regulation devices 15 as for the plant described with reference to Fig. 1.

The plant in Fig. 3 comprises a roller press 31 and a separator 35 with a disagglomerator 33. New material is supplied either to the inlet 30 or the outlet 32 of the roller press 31 and is conveyed after grinding from the roller press to the separator 33, 35. Gas is passed to the disagglomerator 33 via its gas inlet 17 and conveys material further from here to the separator 35, by which the material is sorted into a coarse fraction, which is returned to the roller press 31, and a fine fraction, which suspended in the gas via the outlet 19 is conveyed to the drying chamber 9, in which the final drying of the material is carried out by means of hot gas supplied via the duct 11 from the duct 7. The control of the material moisture in this plant is also carried out in the same manner as for the plant described with reference to Fig. 1.

## Claims

1. A method for grinding material, by which method the material is ground in a mill (1; 21; 31), dried and conveyed by means of a transport gas, and sorted in a classifying separator (1; 25; 35) from which a coarse fraction is returned to the mill, while the fine fraction is precipitated from the transport gas in a precipitation separator (3), characterized in that the mill is a roller mill; in that the moisture of the material in the mill and in the classifying separator (1; 25; 35) is controlled by regulating the heat content of the transport gas being directed to the separator (1; 25; 35), and in that hot gas, by-passing the mill and classifying separator is passed to a drying chamber (9), arranged between the classifying separator (1; 25; 35) and the precipitation separator (3) for final drying of the material.

2. A method according to claim 1, characterized in, that the gas for the final drying in the drying chamber (9) is supplied from a preheater or a heat generator.

3. A method according to claim 1, characterized in that the gas being introduced into the drying chamber (9) for the final drying of the material therein, at least partly is extracted via a first duct (11) as a partial portion of the gas which via a second duct (7) is passed to the classifying separator (1; 25; 35); in that the gas from the precipitation separator (3) is conveyed via a fan (5) and at least partly via a third duct (13) is introduced in and mixed with the gas in the second duct (7), and in that the gas portions through the ducts (7, 11, 13) are controlled by means of control devices (15).

4. A plant for carrying out the method according to any of the previous claims, and which comprises a grinding, drying and separation unit (1,21), the unit including a roller mill (23,31) and a classifying separator (25,35); a drying chamber (9); a precipitation separator (3); a fan (5); ducts (7,13,9) for the supply and discharge of gas to and from the unit (1; 21, 23, 25; 31, 35); a duct (11), which by-passes the unit and which connects the gas supply duct (7) of the unit with the drying chamber (9); regulation devices (15) for controlling the gas flows through the ducts (7, 11, 13); and means for at least partly recirculating gas from the precipitator to the unit.

## Patentansprüche

1. Verfahren zur Materialzerkleinerung, bei dem das Material in einer Mühle (1; 21; 31) zerkleinert, getrocknet und mit einem Transportgas gefördert wird, sowie in einer Klassiertrenneinrichtung (1; 25; 35) sortiert wird, aus der ein grober Anteil zur Mühle zurückgeführt wird, während der feine Anteil in einer Ausscheidungstrenneinrichtung (3) aus dem Transportgas ausgeschieden wird, dadurch gekennzeichnet, daß die Mühle eine Wälzmühle ist, daß die Feuchtigkeit des Materials in der Mühle und in der Klassiertrenneinrichtung (1; 25; 35) durch Regelung des Wärmeinhalts des zur Trenneinrichtung (1; 25; 35) gerichteten Transportgases gesteuert wird und daß die Mühle und die Klassiertrenneinrichtung umgehendes heißes Gas, zu einer Trockenkammer (9) geleitet wird, die zur abschließenden Trocknung des Materials zwischen der Klassiertrenneinrichtung (1; 25; 35) und der Ausscheidungstrenneinrichtung (3) angeordnet ist.

2. Verfahren nach Anspruch 1, dadurch gekennzeichnet, daß das Gas zur abschließenden Trocknung in der Trockenkammer (9) von einer Vorheizeinrichtung oder einer Wärmeerzeugungseinrichtung zugeführt wird.

3. Verfahren nach Anspruch 1, dadurch gekennzeichnet, daß das zur abschließenden Trocknung des Materials darin in die Trockenkammer (9) eingeleitete Gas zumindest teilweise über eine erste Leitung (11) als Teilmenge des Gases, welches über eine zweite Leitung (7) zur Klassiertrenneinrichtung (1; 25; 35) geleitet wird, abgetrennt wird, daß das Gas von der Ausscheidungstrenneinrichtung (3) über ein Gebläse (5) gefördert und zumindest teilweise über eine dritte Leitung (13) in die zweite Leitung (7) eingeleitet und mit dem Gas darin gemischt wird und daß die Gasmengen durch die Leitungen (7, 11, 13) mit Steuervorrichtungen (15) gesteuert werden.

4. Anlage zur Ausführung des Verfahrens nach einem der vorhergehenden Ansprüche, die aufweist: eine Zerkleinerungs-, Trocken- und Trenneinheit (1, 21), wobei die Einheit eine Wälzmühle (23, 31) und eine Klassiertrenneinrichtung (25, 35) enthält, eine Trockenkammer (9), eine Ausscheidungstrenneinrichtung (3), ein Gebläse (5), Leitungen (7, 13, 9) zur Zuführung von Gas zur Einheit (1; 21, 23, 25; 31, 35,) sowie zur Abgabe von Gas daraus, eine Leitung (11), welche die Einheit umgeht und die Gaszuführleitung (7) der Einheit mit der Trockenkammer (9) verbindet, Regelvorrichtungen (15) zum Steuern der Gasflüsse durch die Leitungen (7, 11, 13) und eine Einrichtung zur zumindest teilweisen Rückführung von Gas von der Ausscheidungseinrichtung zur Einheit.

## Revendications

1. Procédé de broyage d'un matériau, grâce auquel le matériau est broyé dans un broyeur (1 ; 21 ; 31), séché et transporté par un gaz de transport, et trié dans un séparateur de classification (1 ; 25 ; 35) à partir duquel une fraction grossière est renvoyée au broyeur, alors que la fraction fine subit une précipitation par rapport au gaz de transport dans un séparateur de précipitation (3), caractérisé en ce que le broyeur est un broyeur à rouleaux, en ce que l'humidité du matériau dans le broyeur et dans le séparateur de classification (1 ; 25 ; 35) est réglée par régulation de la teneur en humidité du gaz de transport dirigé vers le séparateur (1 ; 25 ; 35), et en ce que le gaz chaud, passant en dérivation par rapport au broyeur et au séparateur de classification, est transmis à une chambre de séchage (9) placée entre le séparateur de classification (1 ; 25 ; 35) et le séparateur de précipitation (3) pour le séchage final du matériau.

2. Procédé selon la revendication 1, caractérisé en ce que le gaz destiné au séchage final dans la chambre de séchage (9) est transmis par un préchauffeur ou un générateur de chaleur.

3. Procédé selon la revendication 1, caractérisé en ce que le gaz introduit dans la chambre de séchage (9) pour le séchage final du matériau est extrait au moins partiellement par un premier conduit (11) sous forme d'une portion du gaz qui est transmis, par un second conduit (7) au séparateur de classification (1 ; 25 ; 35), en ce que le gaz du séparateur de précipitation (3) est transporté par un ventilateur (5) et est introduit au moins partiellement par un troisième conduit (13) dans le gaz du second conduit (7) et est mélangé à ce gaz, et en ce que les parties de gaz circulant dans les conduits (7, 11, 13) sont réglées par des dispositifs de commande (15).

4. Installation destinée à la mise en oeuvre du procédé selon l'une des revendications précédentes et qui comprend un ensemble (1, 21) de broyage, de séchage et de séparation, l'ensemble comprenant un broyeur à rouleaux (23, 31) et un séparateur de classification (25, 35), une chambre de séchage (9), un séparateur de précipitation (3), un ventilateur (5), des conduits (7, 13, 9) destinés à transmettre du gaz à l'ensemble (1 ; 21, 23, 25 ; 31, 35) et à l'évacuer de cet ensemble, un conduit (11) en dérivation par rapport à l'ensemble et qui raccorde le conduit d'alimentation en gaz (7) de l'ensemble à la chambre de séchage (9), des dispositifs de régulation (15) destinés à régler les débits de gaz dans les conduits (7, 11, 13), et un dispositif destiné à faire recirculer au moins partiellement le gaz du précipitateur vers l'ensemble.
